Europäisches Patentamt

European Patent Office

Office européen des brevets

(19)

(11) Numéro de publication: 0 341 111
A1

## (12) DEMANDE DE BREVET EUROPEEN

(21) Numéro de dépôt: 89401074.3

(22) Date de dépôt: 18.04.89

(51) Int. Cl.⁴: **B 22 D 17/24**
B 22 D 19/16, B 22 C 9/00,
B 22 C 19/00

(30) Priorité: 04.05.88 FR 8806007

(43) Date de publication de la demande:
08.11.89 Bulletin 89/45

(84) Etats contractants désignés:
AT BE CH DE ES FR GB GR IT LI LU NL SE

(71) Demandeur: D.E.M.O.
16, avenue des Cures
F-95580 Andilly (FR)

(72) Inventeur: Macrez, Guy
55, 4ème avenue Le Lys Chantilly
F-60270 Lamorlaye (FR)

(74) Mandataire: Netter, André et al
Cabinet NETTER 40, rue Vignon
F-75009 Paris (FR)

(54) Dispositif pour la mise en place d'inserts dans un moule.

(57) Dispositif pour la mise en place d'inserts (20) dans un moule (26) monté sur une machine à mouler, comprenant un bâti (7) fixé de façon précise sur les colonnes de guidage (3,4) de la machine, des rails de guidage (14) solidaires du bâti et orientés selon une direction transversale à la direction d'ouverture du moule, un chariot (15) coulissant avec butée sur les rails et relié à une plaque de base (17) sur laquelle un support (18) pour les inserts peut se déplacer dans la direction d'ouverture.

Le dispositif permet la mise en place précise et fiable des inserts disposés manuellement sur le support, pratiquement sans allonger le cycle de travail.

FIG.4

EP 0 341 111 A1

## Description

### Dispositif pour la mise en place d'inserts dans un moule.

L'invention concerne la mise en place d'inserts dans un moule comprenant une partie fixe et une partie mobile et monté dans une machine à mouler.

Ces inserts, qui peuvent être métalliques, plastiques ou autres, sont destinés à être partiellement ou totalement noyés dans une matière introduite ultérieurement dans le moule pour la réalisation d'une pièce moulée composite.

Dans un procédé connu de mise en place d'inserts, un opérateur dispose manuellement les inserts directement dans l'une des parties du moule, ou partie réceptrice, après ouverture du moule et démoulage de la pièce précédemment réalisée. Ce procédé a l'inconvénient de nécessiter le maintien du moule à l'état ouvert pendant la pose manuelle des inserts, ce qui allonge la durée du cycle et par conséquent réduit la production de la machine. De plus la durée d'ouverture dépend de l'habileté de l'opérateur et peut varier d'un cycle à l'autre en fonction des difficultés rencontrées. La variation de la durée du cycle entraine une variation du temps pendant lequel la matière à mouler est maintenue en température, et par suite des différences dans les caractéristiques des pièces moulées.

Pour éviter ces inconvénients, on a proposé un dispositif permettant à l'opérateur de disposer les inserts sur un support mobile "en temps masqué". La mise en place manuelle des inserts sur le support s'effectue à l'écart du moule, pendant le déroulement du cycle de moulage. Au moment de l'ouverture du moule pour le démoulage de la pièce précédente, et pour autant que l'opérateur ait "validé" son opération par une manoeuvre prescrite, le dispositif amène le support garni d'inserts entre les deux parties du moule et les inserts sont transférés par des moyens magnétiques, hydrauliques ou autres dans la partie réceptrice, puis le support est effacé pour permettre la fermeture du moule et ramené dans sa position de chargement par l'opérateur. Ce procédé ne prolonge la durée d'ouverture du moule que d'un temps très court et constant.

Le dispositif connu pour la mise en oeuvre de ce procédé comprend un vérin hydraulique dont le corps est monté au-dessus des plateaux porte-moules de la machine et peut se déplacer par rapport au plateau fixe horizontalement et transversalement à la direction horizontale d'ouverture du moule, l'axe du vérin étant lui-même vertical et l'extrémité de sa tige portant le support d'inserts. Après chargement des inserts sur le support, la tige du vérin est rentrée pour permettre au support de passer au-dessus des colonnes de guidage de la machine, le corps du vérin est déplacé transversalement pour amener le support au-dessus du moule, et la tige du vérin est sortie pour introduire le support entre les parties du moule et permettre le transfert des inserts. Les mouvements inverses sont ensuite exécutés pour ramener le support en position de chargement. L'imprécision du mouvement du corps du vérin, celle de la course de la tige et la disposition du support en porte-à-faux à l'extrémité de celle-ci font que le positionnement du support par rapport à la partie réceptrice du moule est très imprécis, ce qui conduit à des incidents de fonctionnement.

Le but de l'invention est de remédier aux inconvénients précités, et de permettre la mise en place d'inserts avec un allongement minime et constant de la durée du cycle de la machine, et avec une grande précision de positionnement et une parfaite sûreté.

L'invention vise un dispositif du type comprenant un support pouvant se déplacer entre une position de transfert adjacente à la partie réceptrice du moule, dans laquelle des inserts préalablement disposés sur le support peuvent être transférés de celui-ci à la partie réceptrice du moule à l'état ouvert, et une position de chargement, décalée par rapport au moule dans une direction transversale par rapport à la direction d'ouverture de celui-ci, dans laquelle un opérateur peut y disposer des inserts.

Le dispositif comprend en outre, conformément à l'invention :
- un bâti fixe par rapport à la partie réceptrice;
- des moyens pour positionner de façon précise le bâti par rapport à la partie réceptrice;
- des rails de guidage solidaires du bâti et orientés selon ladite direction transversale;
- un chariot monté coulissant sur les rails de guidage;
- des moyens de butée pour limiter le mouvement du chariot en direction du moule dans une position déterminée par rapport à celui-ci;
- une plaque de base solidaire du chariot et portant le support, et
- des moyens pour déplacer le support par rapport à la plaque de base dans la direction d'ouverture du moule.

De préférence, la partie réceptrice est la partie fixe du moule.

Selon un mode de mise en oeuvre de l'invention, la plaque de base vient, en fin de course du chariot, entre les deux parties du moule et est reliée par un bras au chariot qui reste à l'extérieur du moule.

L'invention s'applique notamment avec une machine à mouler dont la direction d'ouverture du moule est horizontale. La direction de déplacement du chariot est elle aussi de préférence sensiblement horizontale.

Dans un exemple de réalisation, le bâti est fixé sur deux des colonnes de la machine à mouler servant au guidage de la partie mobile du moule.

Selon une variante, le bâti est fixé directement sur la partie réceptrice au moyen de centreurs prévus sur celle-ci.

D'autres caractéristiques et avantages de l'invention ressortiront de la description détaillée donnée ci-après et des dessins annexés dans lesquels :

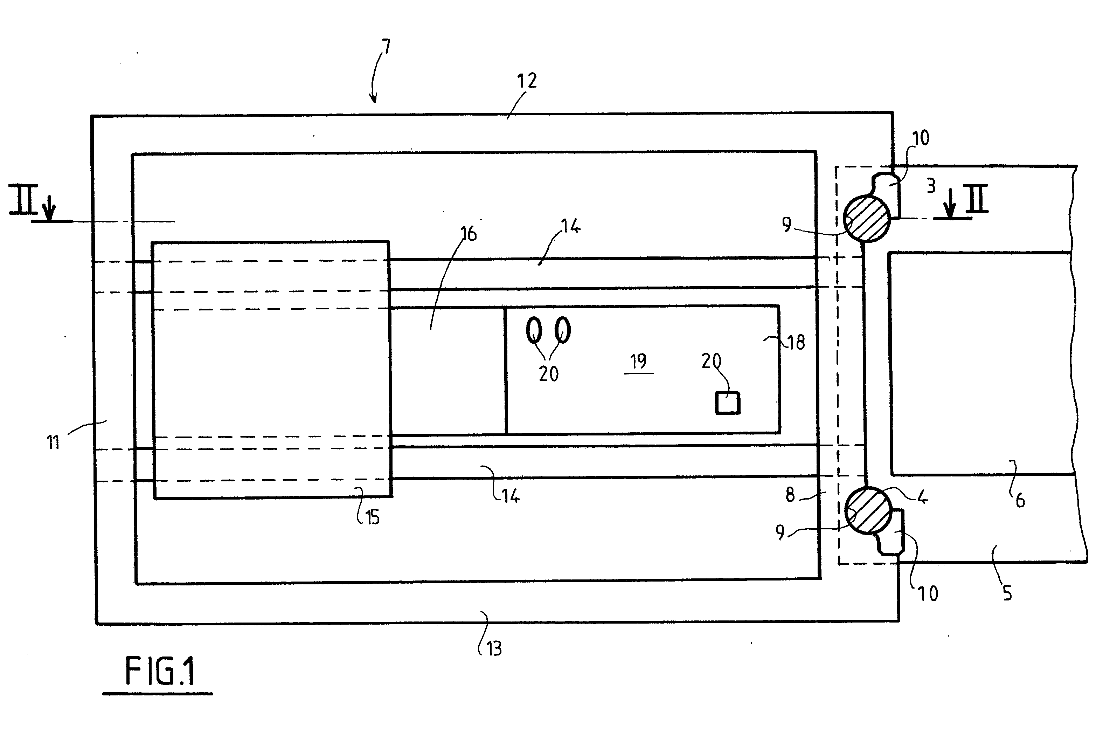

- la figure 1 est une vue partielle en élévation d'une presse à injecter équipée d'un dispositif de mise en place d'inserts selon l'invention, ces derniers étant en position de chargement du support d'inserts;

- la figure 2 est une vue en coupe selon la ligne II-II dans la figure 1;

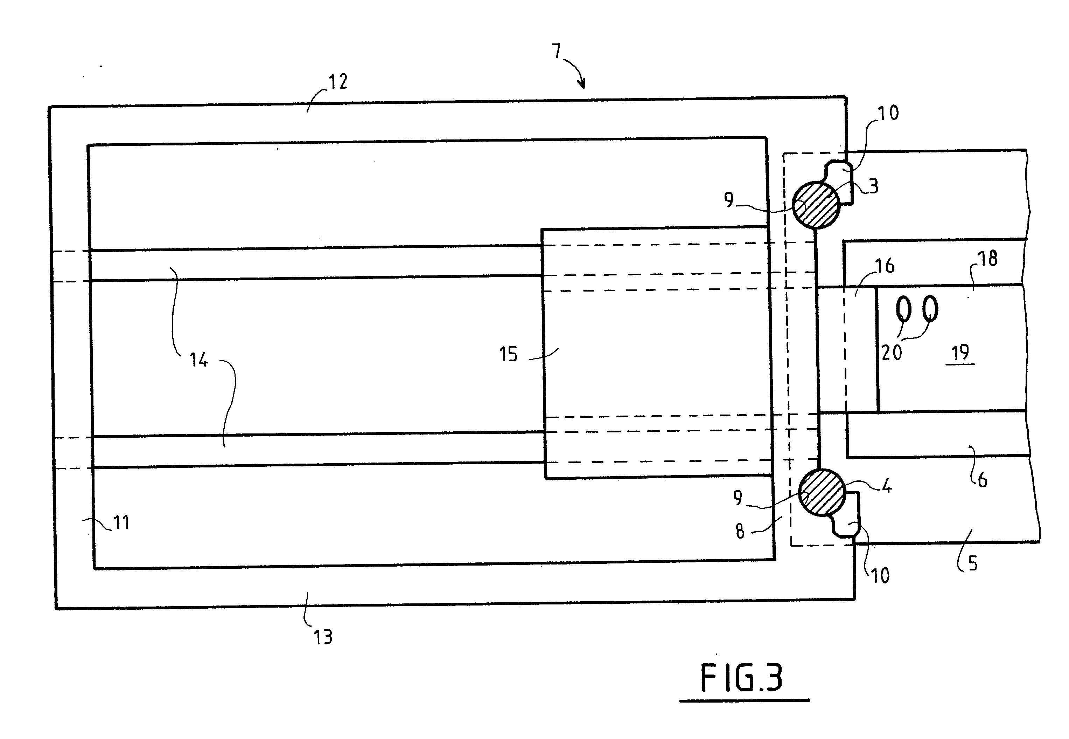

- la figure 3 est une vue analogue à la figure 1, le support d'inserts étant amené en regard de la partie fixe du moule ouvert;

- la figure 4 est une vue analogue à la figure 2, relative à la position de la figure 3; et

- la figure 5 est une vue analogue à la figure 4, le support d'inserts étant en position de transfert des inserts dans la partie fixe du moule.

Le dispositif de mise en place d'inserts illustré est monté sur une presse à injecter dont seuls sont représentés un plateau fixe 1 supportant la partie fixe 2 d'un moule, deux colonnes horizontales superposées 3 et 4 solidaires du plateau fixe 1, et un plateau mobile 5 guidé sur les colonnes 3 et 4 et sur deux autres colonnes non représentées, et portant la partie mobile 6 du moule.

Le dispositif comprend un bâti 7 représenté schématiquement sous la forme d'un cadre rectangulaire monobloc. Un montant 8 de ce cadre présente sur sa face externe deux rainures semi-cylindriques transversales 9 dont la forme et l'écartement leur permet d'épouser respectivement les colonnes 3 et 4. Deux pièces de verrouillage amovibles 10, fixées sur le montant 8 par des moyens non représentés tels que des vis, coopèrent respectivement avec les deux rainures 9 pour définir des logements recevant les colonnes 3 et 4 sur les trois quarts environ de leur circonférence, assurant ainsi un positionnement précis et stable du bâti sur les colonnes. Le montant 8 est disposé verticalement, ainsi que le montant opposé 11 du cadre. Ces deux montants sont reliés par deux longerons haut et bas 12 et 13 qui s'étendent horizontalement et perpendiculairement aux colonnes 9, vers l'extérieur de la presse à partir du montant 8.

Deux rails de guidage 14 parallèles aux longerons 12 et 13 sont montés entre les montants 8 et 11. Un chariot 15 coulisse sur ces rails, sur lequel est fixé un bras 16 qui s'étend à partir du chariot, parallèlement aux rails, en direction de la presse. Le bras 16 est terminé par une plaque de base 17, représentée ici comme formée d'une seule pièce avec lui, qui porte un support d'inserts 18. Le support 18 est situé par rapport à la plaque 17 dans le sens du mouvement du plateau mobile 5 de la presse pour la fermeture du moule, ou sens de fermeture du moule, indiqué par la flèche F. La face 19 du support tournée dans ce même sens, c'est-à-dire opposé à la plaque 17, présente des alvéoles pour la réception d'inserts destinés à être mis en place, lors de chaque cycle de moulage, dans la partie fixe 2 du moule.

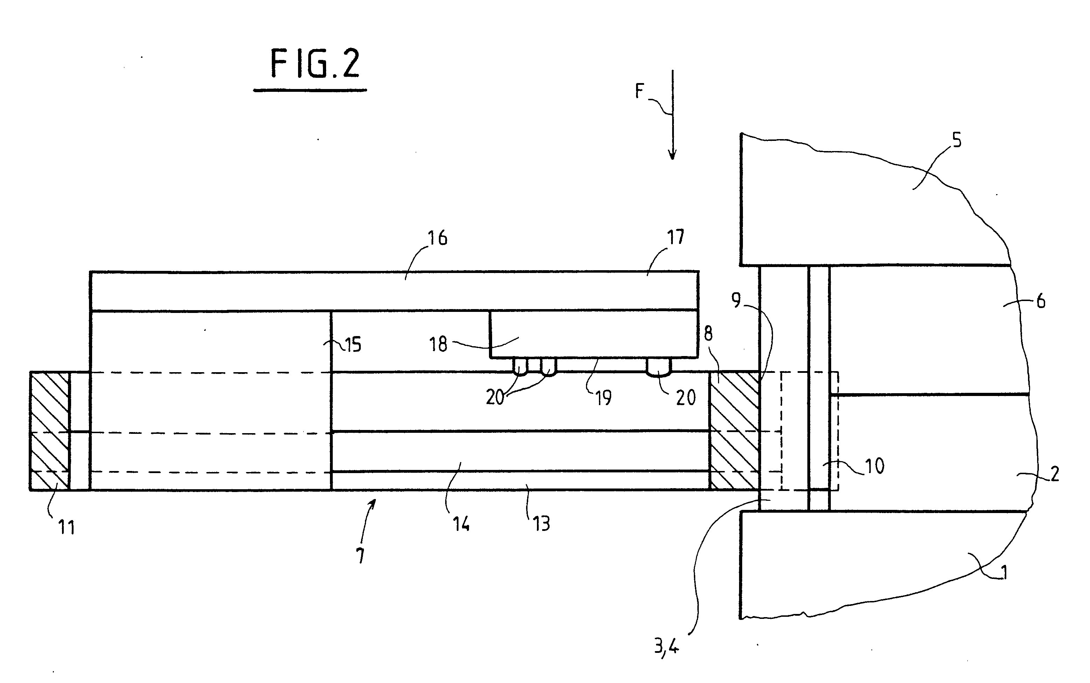

La figure 2 illustre un stade, au cours d'un cycle de moulage, dans lequel le moule est encore fermé et un opérateur a déjà disposé dans les alvéoles du support 18 des inserts 20 destinés à être mis en place dans le moule lors du cycle suivant. Lors de la poursuite du cycle en cours, le moule s'ouvre par un mouvement du plateau mobile 5 et de la partie mobile 6 du moule dans le sens opposé à celui de la flèche F. Dès que l'écartement des deux parties du moule est suffisant, le chariot 15 est entraîné le long des rails 14 par des moyens non représentés, de façon que la plaque 17 et le support 18, solidaires du chariot par l'intermédiaire du bras 16, pénètrent dans l'intervalle entre les deux parties du moule. Une butée est prévue pour limiter le mouvement du chariot en une position prédéterminée de façon précise. Cette butée est représentée comme constituée par la face interne du montant 8 du cadre 7, sur laquelle vient s'appuyer la face en regard du chariot 15. Bien entendu, les moyens de butée pourraient être différents, et en particulier réglables.

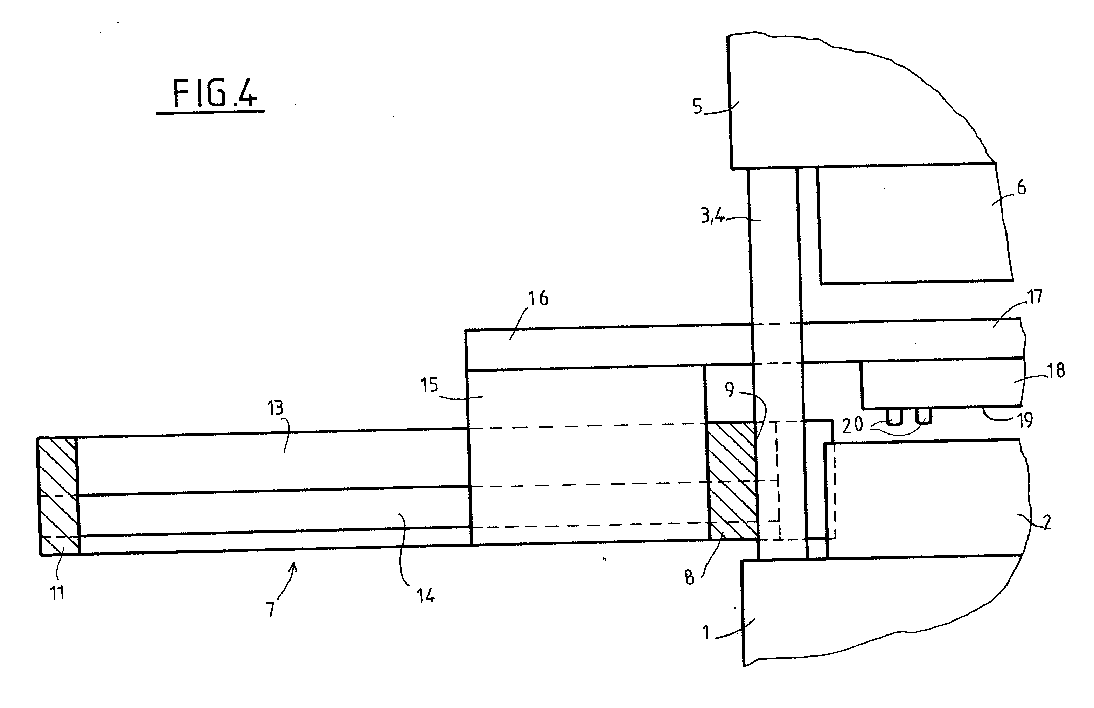

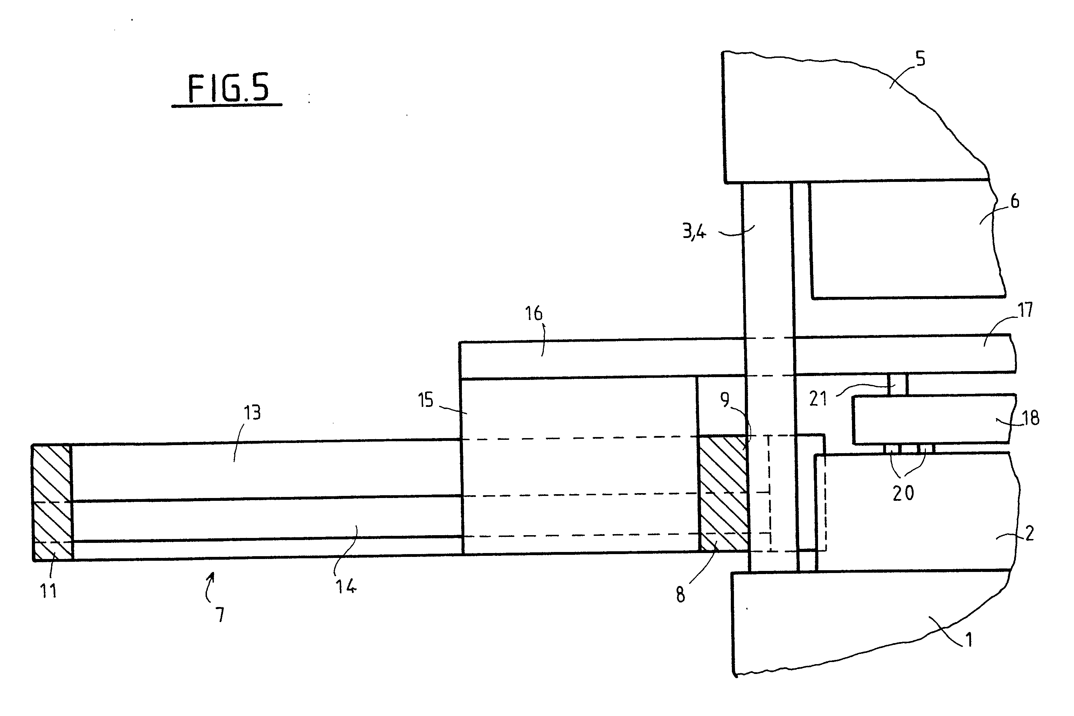

La position atteinte en fin de course du chariot 15 est montrée à la figure 4. La face 19 du support 18 portant les inserts 20 est alors en regard de la face interne de la partie fixe 2 du moule qui doit recevoir ces inserts. La phase suivante comporte un mouvement du support 18 dans le sens de fermeture F, le support s'éloignant de la plaque 17 et s'approchant de la partie fixe du moule. Ce mouvement s'effectue grâce à des moyens d'entraînement non représentés et avec un guidage par rapport à la plaque 17 par des moyens de guidage représentés schématiquement en 21 à la figure 5. Il amène les inserts 20 dans la position qu'ils doivent occuper par rapport à la partie fixe du moule, à laquelle ils sont alors solidarisés par des moyens connus, par exemple mécaniques ou magnétiques.

Le support 18, débarrassé des inserts, est ensuite ramené en direction de la plaque 17, puis l'équipage coulissant 15, 16, 17, 18 revient dans la position de la figure 2. Dès que la plaque 17 et le support 18 ont quitté l'intervalle compris entre les deux parties du moule, celui-ci amorce son mouvement de fermeture pour un nouveau cycle de moulage. Lorsque le chariot est revenu à sa position initiale, l'opérateur peut de nouveau disposer des inserts sur le support 18 pour un prochain cycle.

On comprend que le dispositif décrit permet d'amener les inserts de façon très précise dans les positions qu'ils doivent occuper dans la partie réceptrice du moule. Ceci est obtenu notamment grâce au guidage précis du chariot 15 sur les rails 14, ces derniers étant eux-mêmes positionnés de façon précise et stable grâce à la rigidité du bâti 7 et à sa coopération avec les colonnes 3 et 4. Ces colonnes constituent une excellente référence puisqu'elles assurent le guidage du mouvement relatif des plateaux 1 et 5 et que les parties du moule 2 et 6 sont repérées avec précision par rapport à ces derniers pour assurer la fermeture parfaite du moule. Le faible porte-à-faux du support d'inserts 18 par rapport au chariot 15 contribue également à la précision du dispositif, ainsi que le guidage direct, par rapport à la plaque de base 17 insérée dans le moule, du mouvement du support 18 dans la direction de fermeture du moule.

Le dispositif décrit peut être utilisé avec différents moules et peut être laissé en place sur la machine lors du changement de moule, seul le support 18, dont les alvéoles sont disposés en fonction de la forme et de l'emplacement des inserts, devant être remplacé.

Les détails de réalisation du dispositif font appel à des techniques courantes et ne nécessitent pas de description particulière. On notera simplement que les différents mouvements peuvent être réalisés grâce au circuit hydraulique de la presse, ou par des moyens indépendants.

Le dispositif selon l'invention peut également servir à la mise en place d'inserts dans la partie mobile du moule.

Selon une variante, un dispositif selon l'invention peut être fixé directement à la partie réceptrice du moule et non à la presse, son positionnement précis étant assuré grâce à des éléments de centrage prévus sur cette partie du moule. Un tel dispositif ne peut alors être utilisé qu'avec un seul moule ou des moules présentant des éléments de centrage semblables.

**Revendications**

1. Dispositif pour la mise en place d'inserts (20) dans un moule comprenant une partie fixe (2) et une partie mobile (6) et monté sur une machine à mouler, ledit dispositif comprenant un support (18) pouvant se déplacer entre une position de transfert adjacente à l'une (2) desdites parties du moule, dite partie réceptrice, dans laquelle des inserts préalablement disposés sur le support peuvent être transférés de celui-ci à la partie réceptrice du moule à l'état ouvert, et une position de chargement, décalée par rapport au moule dans une direction transversale par rapport à la direction d'ouverture de celui-ci, dans laquelle un opérateur peut y disposer des inserts, caractérisé en ce qu'il comprend en outre :
- un bâti (7) fixe par rapport à la partie réceptrice (2);
- des moyens (9,10) pour positionner de façon précise le bâti par rapport à la partie réceptrice;
- des rails de guidage (14) solidaires du bâti et orientés selon ladite direction transversale;
- un chariot (15) monté coulissant sur les rails de guidage;
- des moyens de butée pour limiter le mouvement du chariot en direction du moule dans une position déterminée par rapport à celui-ci;
- une plaque de base (17) solidaire du chariot et portant le support (18), et
- des moyens pour déplacer le support par rapport à la plaque de base dans la direction d'ouverture du moule.

2. Dispositif selon la revendication 1, caractérisé en ce que le bâti est fixé sur deux (3,4) des colonnes de la machine à mouler servant au guidage de la partie mobile (6) du moule.

3. Dispositif selon la revendication 1, caractérisé en ce que le bâti est fixé sur la partie réceptrice du moule au moyen de centreurs prévus sur celle-ci.

4. Dispositif selon l'une des revendications précédentes, caractérisé en ce que la partie réceptrice est la partie fixe (2) du moule.

5. Dispositif selon l'une des revendications précédentes, caractérisé en ce que la plaque de base vient, en fin de course du chariot, entre les deux parties du moule et est reliée par un bras (16) au chariot qui reste à l'extérieur du moule.

6. Dispositif selon l'une des revendications précédentes, caractérisé en ce que ladite direction transversale est sensiblement horizontale.

7. Dispositif selon l'une des revendications 1 à 5, caractérisé en ce que le bâti est fixé sur la partie réceptrice du moule au moyen de centreurs prévus sur celle-ci.

FIG.1

FIG.2

FIG.3

EP 0 341 111 A1

FIG.4

FIG.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-2 930 015 (GEBR. BUEHLER AG)<br>* revendication 1 *<br>--- | 1 | B 22 D 17/24<br>B 22 D 19/16<br>B 22 C 9/00<br>B 22 C 19/00 |
| A | DE-A-2 945 076 (UBE INDUSTRIES)<br>* revendication 1 *<br>--- | 1 | |
| A | DE-A-3 135 259 (W. WEBER KG)<br>* revendication 1 *<br>----- | 1 | |

DOMAINES TECHNIQUES
RECHERCHES (Int. Cl.4)

B 22 D 17/00
B 22 D 19/00
B 22 C 9/00
B 22 C 19/00

Le présent rapport a été établi pour toutes les revendications

| Lieu de la recherche | Date d'achèvement de la recherche | Examinateur |
|---|---|---|
| BERLIN | 21-07-1989 | GOLDSCHMIDT G |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

.......................................................................................

& : membre de la même famille, document correspondant

EPO FORM 1503 03.82 (P0402)